# EUROPÄISCHE PATENTSCHRIFT

(11) **EP 1 179 747 B1**
(45) Veröffentlichungstag und Bekanntmachung des Hinweises auf die Patenterteilung: **15.02.2006**
(21) Anmeldenummer: 01116383.9
(22) Anmeldetag: 06.07.2001
(51) Int. Cl.: G02B 26/08

(54) **Optische Anordnung zum Ablenken eines Lichtstrahls**
Optical assembly for deflecting a light beam
Ensemble optique pour dévier un faisceau de lumière

(30) Priorität: 11.07.2000 DE 10033549
(43) Veröffentlichungstag der Anmeldung: 13.02.2002
(73) Patentinhaber: Leica Microsystems Heidelberg GmbH, 68165 Mannheim (DE)
(72) Erfinder: Engelhardt, Johann, Dr., 76669 Bad Schönborn (DE)
(74) Vertreter: Reichert, Werner Franz

(56) Entgegenhaltungen:
- US-A- 4 196 461
- US-A- 4 874 215
- US-A- 5 561 544

## Beschreibung

Die vorliegende Erfindung betrifft eine Optische Anordnung zum Ablenken eines Lichtstrahls insbesondere in zwei im wesentlichen senkrecht zueinander liegenden Richtungen, mit zwei mittels jeweils eines Drehantriebs um senkrecht zueinander liegende Achsen - x-Achse und y-Achse - drehbaren ersten und dritten Spiegel, wobei einem der beiden Spiegel ein zweiter Spiegel in einer vorgegebenen Winkelposition drehfest zugeordnet ist, so dass die einander zugeordneten ersten und zweiten Spiegel gemeinsam um die y-Achse drehen und dabei den Lichtstrahl um einen Drehpunkt drehen, der auf der Drehachse - x-Achse - des dritten Spiegels liegt.

Eine optische Anordnung der gattungsbildenden Art ist aus der DE 196 54 210 C2 bekannt. Die aus dieser Druckschrift bekannte Anordnung zum Scannen eines Strahls ermöglicht in vorteilhafter Weise hohe Scanraten beim Ablenken des Lichtstrahls.

Nachteilig bei der bekannten Anordnung sind Scanfehler, die sich insbesondere nach dem Scannen eines Objekts mit einem konfokalen Rastermikroskop in Form einer hyperbolischen Verzeichnung ergibt. Die Verzeichnung kann zwar rechnerisch korrigiert werden, das ist jedoch unter Umständen problematisch, da insbesondere bei einer Objektabtastung, bei der das Abtasttheorem nicht erfüllt ist, das Bild nicht eindeutig rechnerisch rekonstruiert werden kann.

Der vorliegenden Erfindung liegt daher die Aufgabe zugrunde, eine gattungsbildende Anordnung zum Ablenken eines Lichtstrahls in zwei im wesentlichen senkrecht zueinander liegenden Richtungen derart anzugeben und weiterzubilden, dass die durch die Anordnung erzeugten Verzeichnungsfehler minimiert und im Idealfall eliminiert werden können.

Die erfindungsgemäße Anordnung der gattungsbildenden Art löst die voranstehende Aufgabe durch die Merkmale des Patentanspruchs 1.

Erfindungsgemäß ist zunächst erkannt worden, dass die in der DE 196 54 210 C2 genannte hyperbolische Verzeichnung dann minimiert bzw. eliminiert werden kann, wenn die Drehung der einander zugeordneten Spiegel - erster und zweiter Spiegel -, die gemeinsam um die y-Achse drehen, den Lichtstrahl nach Reflexion an dem dritten Spiegel lediglich entlang einer Richtung bzw. einer Geraden ablenken. Ebenfalls muß bei der Drehung des dritten Spiegels um die x-Achse der Lichtstrahl lediglich entlang einer Richtung bzw. einer Geraden abgelenkt werden. Dementsprechend ist die Entkopplung der Drehung der Spiegel um ihre jeweiligen Drehachsen zu den Ablenkrichtungen der jeweils anderen Drehachse entsprechenden Ablenkrichtung eine grundsätzliche Voraussetzung zur verzeichnungsarmen Ablenkung des Lichtstrahls. Die erfindungsgemäße Anordnung der ersten beiden Spiegel relativ zum dritten Spiegel ermöglicht eine solche Entkopplung, da die optische Achse des vom zweiten Spiegel reflektierten und zum dritten Spiegel verlaufenden Lichtstrahls stets auf den dritten Spiegel auftrifft und der Auftreffpunkt der optischen Achse des Lichtstrahls auf der Drehachse des dritten Spiegels - x-Achse - liegt und in erfindungsgemäßer Weise während der Drehung der beiden einander zugeordneten Spiegel stets in der senkrecht zur Y-Achse stehenden Ebene liegt.

In weiter vorteilhafter Weise sind die Spiegel derart angeordnet, dass die optische Achse des von dem zweiten Spiegel zu dem dritten Spiegel verlaufenden Lichtstrahls stets im wesentlichen in einem Punkt auf der Spiegelfläche des dritten Spiegels auftrifft, der der Schnittpunkt der beiden Drehachsen ist. Durch diese Anordnung der Spiegel wird bei Drehung der beiden ersten Spiegel unabhängig von deren Schwenkwinkel die optische Achse des vom zweiten Spiegel reflektierten Lichtstrahls stets um den gleichen Punkt geschwenkt, was in vorteilhafter Weise einen telezentrischen Strahlengang auch nach der Spiegelanordnung aufrecht erhält. Da unabhängig von der Winkelstellung des dritten Spiegels der Auftreffpunkt des von dem zweiten Spiegel reflektierten Lichtstrahls auf dem dritten Spiegel stets im wesentlichen der Gleiche ist, wird auch bezüglich der Ablenkrichtung des dritten Spiegels der von dem dritten Spiegel reflektierte bzw. abgelenkte Lichtstrahl stets um den Punkt geschwenkt, der auf der Spiegelfläche des dritten Spiegels liegt und der Schnittpunkt der beiden Drehachsen ist. Somit wird der von den drei Spiegeln abgelenkte Lichtstrahl insbesondere in zwei im wesentlichen senkrecht zueinander liegenden Richtungen abgelenkt.

Für die Wirkungsweise der Anordnung zum Ablenken eines Lichtstrahls ist es unerheblich, ob der abzulenkende Lichtstrahl ein nicht aufgeweiteter oder ein aufgeweiteter bzw. kollimierter Lichtstrahl ist.

Eine Ausführungsform ist in Anspruch 1 definiert.

Alternative Ausführungsformen sind in den unabhängigen Ansprüchen definert.

Der vierte Spiegel ist hierbei ortsfest angeordnet. Gegebenenfalls ist er zu Justagezwecken bzw. bei der Produktion verstellbar, nach der Justage jedoch wird er in seiner Position arretiert.

Die beiden ersten Spiegel sind in einem Gehäuse angeordnet. Das Gehäuse weist mindestens zwei Öffnungen auf, durch die die Lichtstrahlen ein- bzw. austreten können. Das Gehäuse weist entsprechende Aufnahmemittel auf, auf denen die beiden Spiegel aufgeklebt oder in einer sonstigen Weise befestigt werden können. Das Gehäuse ist vorzugsweise aus leichtem Material gefertigt und weist idealerweise nach seiner formgebenden Produktion - bspw. durch spanende Formung - eine hinreichende Genauigkeit auf, so dass nach Einbringen der beiden Spiegel keine weitere Justage der Spiegel relativ zu dem Gehäuse notwendig ist. Hierdurch wird in vorteilhafter Weise eine reproduzierbare und schnelle Herstellung ermöglicht. Durch die eine Öffnung tritt das auf den ersten Spiegel auffallende Licht in das Gehäuse ein. Durch die andere Öffnung tritt das von dem zweiten Spiegel reflektierte Licht aus dem Gehäuse aus. Weitere Öffnungen des Gehäuses sind aus Gründen der Vermeidung von Verschmutzungen durch Staubpartikel nicht vorgesehen. Das Gehäuse könnte jedoch eine abnehmbare Seitenwand aufweisen, die zu Reinigungszwecken, auch nach längerer Betriebsdauer, geöffnet werden kann.

Das Gehäuse ist direkt mit dem Drehantrieb verbunden, vorzugsweise direkt an dessen mechanischer Drehachse. Alternativ hierzu wäre eine indirekte Verbindung des Gehäuses mit dem Drehantrieb denkbar, bspw. über ein Getriebe, Kardangelenk oder ein sich abrollendes Blattelement. Hierdurch könnte eine Übersetzung den möglichen Drehwinkel des Drehantriebs verringern bzw. erhöhen, falls die Spiegel über einen größeren bzw. kleineren Winkelbereich gedreht werden müssen. Auch könnte hierdurch die maximale bzw. minimale Dreh- bzw. Schwenkgeschwindigkeit erhöht bzw. emiedrigt werden. Ein sich abrollendes Blattelement - wie es üblicherweise bei Magnetköpfen von Computerfestplatten eingesetzt wird - könnte das Gehäuse um eine Achse drehen, die nicht mit der Drehachse des Drehantriebs kolinear sein muss.

In gleicher Weise könnte der dritte Spiegel entweder direkt oder indirekt mit einem weiteren Drehantrieb verbunden sein. In ersterem Fall ist der dritte Spiegel vorzugsweise direkt an der mechanischen Drehachse des weiteren Drehantriebs - der um die x-Achse dreht - verbunden, in letzterem Fall könnte der dritte Spiegel über ein Getriebe, Kardangelenk oder ein sich abrollendes Blattelement mit dem weiteren Drehantrieb verbunden sein.

Die beiden Drehantriebe können entweder mittelbar oder unmittelbar an einer Aufnahmevorrichtung angebracht sein. Bei der Aufnahmevorrichtung könnte es sich bspw. um eine Platte handeln, an der die beiden Drehantriebe befestigt sind. Hierdurch ist sichergestellt, dass die beiden Drehantriebe in einer wohldefinierten Position relativ zueinander angeordnet sind. Darüber hinaus könnte die Aufnahmevorrichtung als eine Winkelplatte, eine Doppelwinkelplatte oder ein Gehäuse mit entsprechenden Öffnungen ausgebildet sein.

In vorteilhafter Weise ist die Aufnahmevorrichtung drehbar angeordnet. In einer bevorzugten Ausführungsform dreht die Aufnahmevorrichtung um die y-Achse. Durch die Drehung der Aufnahmevorrichtung werden die beiden Drehantriebe der drei Spiegel gemeinsam um die Achse der Aufnahmevorrichtung gedreht, so dass hierdurch die Orientierung der Strahlablenkrichtungen veränderbar ist. Dies ist insbesondere deshalb vorteilhaft, da hierdurch die Orientierung der Ablenkrichtung des alleine drehenden dritten Spiegels verändert werden kann. Der alleine drehende dritte Spiegel wird im allgemeinen mit einer sehr viel höheren Scangeschwindigkeit betrieben als das die beiden Spiegel aufnehmende Gehäuse, das eine sehr viel größere Masse aufweist. Demgemäß kann durch Drehen der Aufnahmevorrichtung die schnelle Strahlablenkrichtung des alleine drehenden dritten Spiegels beliebig orientiert werden, was insbesondere für Anwendungen bei der konfokalen Rastermikroskopie von großem Vorteil ist.

Das die beiden ersten Spiegel aufnehmende Gehäuse weist ein Drehlager auf. Dieses Drehlager könnte in der Aufnahmevorrichtung gelagert sein. Falls keine gemeinsame Aufnahmevorrichtung für die beiden Drehantriebe vorgesehen ist, könnte das Drehlager direkt in dem die Anordnung zum Ablenken eines Lichtstrahls aufnehmenden Gehäuse gelagert sein. In einer konkreten Ausführungsform ist die Achse des Drehlagers kolinear zu der Drehachse der beiden ersten Spiegel.

Weiterhin ist vorgesehen, dass die Aufnahmevorrichtung mindestens ein Drehlager aufweist, das eine Drehung der Aufnahmevorrichtung um eine Achse ermöglicht. Nun könnte das Drehlager des Gehäuses der beiden Spiegel in einem Drehlager der Aufnahmevorrichtung gelagert sein. In diesem Fall könnte die Achse des Drehlagers des Gehäuses der beiden Spiegel kolinear zu der Achse des Drehlagers der Aufnahmevorrichtung angeordnet sein.

Im Hinblick auf einen flexiblen Einsatz der erfindungsgemäßen optischen Anordnung zum Ablenken eines Lichtstrahls ist vorgesehen, dass die einzelnen Bauteile modular ausgeführt und leicht austauschbar sind. Hierzu könnte bspw. das die beiden Spiegel aufnehmende Gehäuse und der das Gehäuse drehende Drehantrieb zu einem austauschbaren Modul zusammengefasst sein. Weiterhin könnte der dritte Spiegel und der ihm drehende Drehantrieb zu einem austauschbaren Modul zusammengefasst sein. Hierdurch könnte entweder das Gehäuse mit den beiden ersten Spiegeln samt dessen Drehantrieb ausgetauscht werden, um bspw. den Winkelbereich der Ablenkung um die y-Achse zu verändern. Auch der dritte Spiegel und der ihn drehende Drehantrieb könnte als Modul ausgetauscht werden, um bspw. einen Drehantrieb höherer oder niedrigerer Scanrate in die optische Anordnung einzusetzen.

Hierdurch kann in vorteilhafter Weise der Anwendungsbereich der erfindungsgemäßen Anordnung flexibel erweitert werden. Weiterhin könnte die gesamte Aufnahmevorrichtung in Form eines austauschbaren Moduls ausgeführt sein, so dass die komplette erfindungsgemäße Anordnung zum Ablenken eines Lichtstrahls austauschbar ist.

Zur Vermeidung von umständlichen bzw. langwierigen Justagen ist vorgesehen, dass die austauschbaren Modulen und/oder die modular ausgeführte Aufnahmevorrichtung Mittel zur exakten Positionierung aufweist. Diese Mittel könnten bspw. in Form von Führungselementen und/oder Anschlagelementen ausgeführt sein.

Als Drehantrieb für das die beiden ersten Spiegel aufnehmende Gehäuse bzw. für den dritten Spiegel könnte ein Galvanometer eingesetzt werden: Zum Erzielen einer hohen Scan- bzw. Ablenkrate könnte auch ein resonantes Galvanometer eingesetzt werden. Ein resonantes Galvanometer wird vorzugsweise als Drehantrieb für den alleine drehenden dritten Spiegel verwendet. Als Drehantrieb könnte auch ein Schrittmotor zum Einsatz kommen.

Ebenfalls zum Erzielen einer hohen Scan- bzw. Ablenkrate könnte einer der Spiegel durch ein aktives optisches Bauteil ersetzt werden. Hierzu könnte bspw. ein AOD (Acousto-Optical-Deflector), EOD (Electro-Optical-Deflector) oder ein DMD (Digital-Micro-Mirror-Device) verwendet werden. Hierbei wäre denkbar, dass der alleine drehende dritte Spiegel durch ein aktives optisches Bauteil ersetzt wird. Dieses optische Bauteil könnte in der Aufnahmevorrichtung angebracht sein.

Weiterhin könnte der optischen Anordnung zum Ablenken eines Lichtstrahls, d.h. den drei Spiegeln, mindestens ein optisch aktives Bauteil vor- und/oder nachgeordnet sein. Auch hierbei könnte es sich bei dem optisch aktiven Bauteil um ein AOD, EOD oder DMD handeln.

Es gibt nun verschiedene Möglichkeiten, die Lehre der vorliegenden Erfindung in vorteilhafter Weise auszugestalten und weiterzubilden. In der Zeichnung zeigen
- Fig. 1: eine schematische Darstellung eines ersten Ausführungsbeispiels einer erfindungsgemäßen optischen Anordnung zum Ablenken eines Lichtstrahls,
- Fig. 2: eine schematische Darstellung eines zweiten erfindungsgemäßen Ausführungsbeispiels und
- Fig.3: eine schematische Darstellung eines dritten erfindungsgemäßen Ausführungsbeispiels.

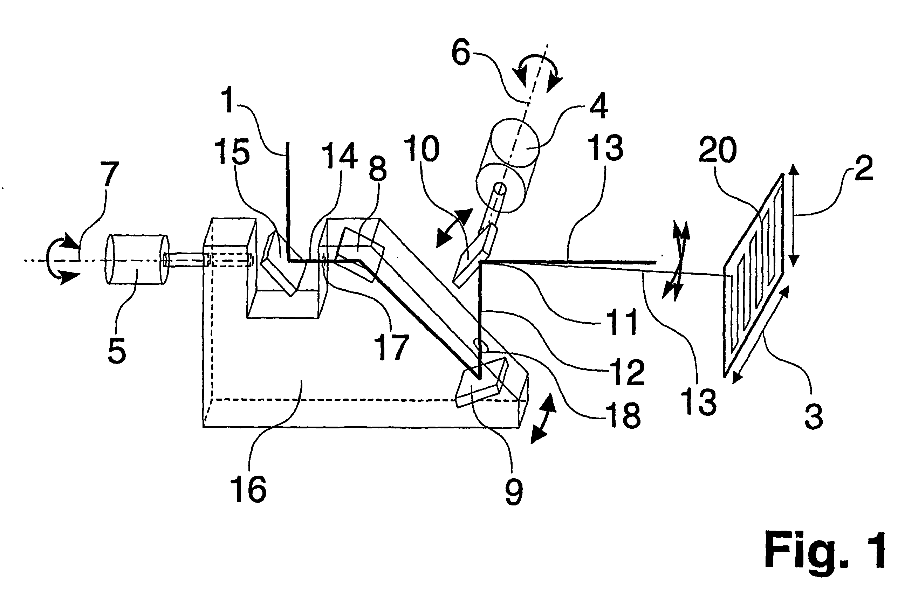

Fig. 1 zeigt eine optische Anordnung zum Ablenken eines Lichtstrahls 1 in zwei im wesentlichen senkrecht zueinander liegenden Richtungen 2, 3. Die optische Anordnung weist zwei mittels jeweils eines Drehantriebs 4, 5 um senkrecht zueinander liegende Achsen - x-Achse 6 und y-Achse 7 - drehbaren Spiegeln 8, 10 auf, wobei dem ersten Spiegel 8 ein weiterer Spiegel 9 in einer vorgegebenen Winkelposition drehfest zugeordnet ist, so dass die einander zugeordneten Spiegel 8, 9, d.h. erster und zweiter Spiegel, gemeinsam um die y-Achse 7 drehen und dabei den Lichtstrahl 1 um einen Drehpunkt 11 drehen, der auf der Drehachse 6 - x-Achse - des dritten Spiegels 10 liegt.

Erfindungsgemäß sind die Spiegel 8, 9, 10 derart angeordnet, dass die optische Achse des zwischen dem zweiten und dem dritten Spiegel 9, 10 verlaufenden Lichtstrahls 12 stets im wesentlichen in einer die x-Achse 6 umfassenden, senkrecht zur y-Achse 7 stehenden Ebene liegt.

Die Spiegel 8, 9, 10 sind derart angeordnet, dass die optische Achse des vom zweiten Spiegel 9 zu dem dritten Spiegel 10 verlaufenden Lichtstrahls 12 stets im wesentlichen in einem Punkt 11 auf der Spiegelfläche des dritten Spiegels 10 auftrifft, der der Schnittpunkt der beiden Drehachsen 6, 7 ist. Demgemäß schwenkt bzw. dreht der abgelenkte Lichtstrahl 13 stets um den Drehpunkt 11. Die optische Achse des auf den ersten Spiegel 8 einfallenden Lichtstrahls 14 und die optische Achse des vom dritten Spiegel 10 reflektierten Lichtstrahls 13 ist im wesentlichen kolinear, wenn sich der dritte Spiegel 10 in der nicht ausgelenkten Position, die in den Fig. 1 bis 3 dargestellt ist, befindet. Die Drehachse 7 der beiden ersten Spiegel 8, 9 ist im wesentlichen kolinear zur optischen Achse des auf den ersten Spiegel 8 einfallenden Lichtstrahls 14. Weiterhin ist die Drehachse 7 der beiden ersten Spiegel 8, 9 im wesentlichen kolinear zur optischen Achse des von dem dritten Spiegel 10 reflektierten Lichtstrahls 13, wenn sich der dritte Spiegel 10 in der nicht ausgelenkten Position befindet.

Zwischen dem Drehantrieb 5, der die beiden ersten Spiegel 8, 9 um die y-Achse 7 dreht, ist ein vierter Spiegel 15 ortsfest angeordnet. Die beiden ersten Spiegel 8, 9 sind in einem Gehäuse 16 angeordnet. Das Gehäuse 16 weist zwei Öffnungen 17, 18 auf. Durch die Öffnung 17 kann der auf den ersten Spiegel 8 einfallende Lichtstrahl 14 durchtreten, durch die Öffnung 18 kann der von dem zweiten Spiegel 9 reflektierte Lichtstrahl 12 zu dem dritten Spiegel 10 verlaufen.

Das Gehäuse 16 ist direkt mit dem Drehantrieb 5 verbunden, und zwar direkt an dessen mechanischer Drehachse. Der dritte Spiegel 10 ist direkt mit dem Drehantrieb 4 an dessen mechanischer Drehachse verbunden.

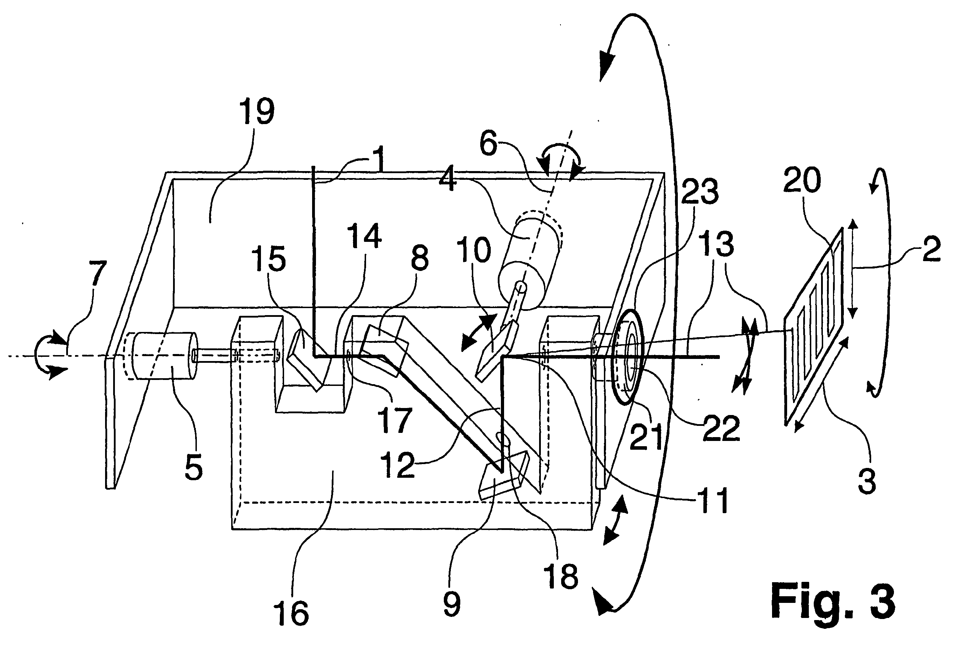

Die beiden Drehantriebe 4, 5 sind unmittelbar an der in Fig. 3 gezeigten Aufnahmevorrichtung 19 angebracht. Die Aufnahmevorrichtung 19 ist drehbar angeordnet und dreht um die y-Achse 7. Durch die Drehung der Aufnahmevorrichtung 19 um die y-Achse 7 ist es möglich, die Orientierung der Strahlablenkrichtungen 2, 3 und somit des Ablenkmusters 20 zu verändern. Somit kann die in diesem Ausführungsbeispiel realisierte schnelle Strahlablenkung entlang der Richtung 2 durch den sich alleine drehenden Spiegel 10 in vorteilhafter Weise beliebig orientiert werden.

Die Drehachse 7 der beiden ersten Spiegel 8, 9 ist im Wesentlichen kolinear zur optischen Achse des auf den ersten Spiegel 8 einfallenden Lichtstrahls 14. Weiterhin ist die Drehachse 7 der beiden ersten Spiegel 8, 9 im Wesentlichen kolinear zur optischen Achse des von dem dritten Spiegel 10 reflektierten Lichtstrahls 13, wenn sich der dritte Spiegel 10 in der nicht ausgelenkten Position befindet.

Zwischen dem Drehantrieb 5, der die beiden ersten Spiegel 8, 9 um die y-Achse 7 dreht, ist ein vierter Spiegel 15 ortsfest angeordnet. Die beiden ersten Spiegel 8, 9 sind in einem Gehäuse 16 angeordnet. Das Gehäuse 16 weist zwei Öffnungen 17, 18 auf. Durch die Öffnung 17 kann der auf den ersten Spiegel 8 einfallende Lichtstrahl 14 durchtreten, durch die Öffnung 18 kann der von dem zweiten Spiegel 9 reflektierte Lichtstrahl 12 zu dem dritten Spiegel 10 verlaufen.

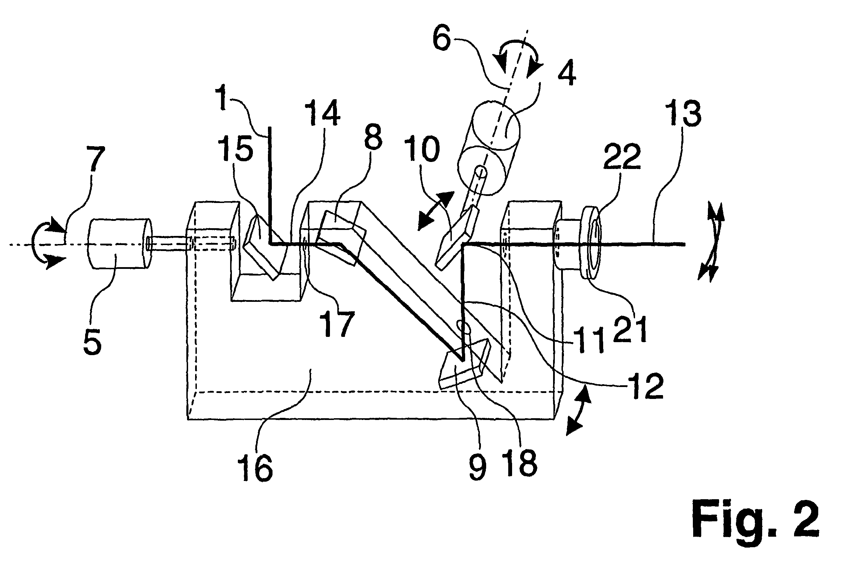

Die Fig. 2 zeigt ein erfindungsgemäßes Ausführungsbeispiel, bei dem das die beiden ersten Spiegel 8, 9 aufnehmende Gehäuse 16 ein Drehlager 21 aufweist. Das Drehlager 21 weist einen Durchgang 22 auf, durch den der abgelenkte Lichtstrahl 13 durchtreten kann. Fig. 2 ist entnehmbar, dass das Drehlager 21 in der Aufnahmevorrichtung 19 gelagert ist. Somit ist das Gehäuse 16 zum einen von dem Drehantrieb 5 und zum anderen von dem Drehlager 21 bei der Drehbewegung um die y-Achse 7 gelagert. Das Drehlager 21 des Gehäuses 16 der beiden Spiegel 8, 9 ist in einem Drehlager 23 der Aufnahmevorrichtung 19 gelagert. Das Drehlager 23 ist mit einem nicht eingezeichneten Gehäuse, das die erfindungsgemäße Anordnung zum Ablenken eines Lichtstrahls aufnimmt, verbunden.

Der Fig. 3 ist andeutungsweise zu entnehmen, dass die Achse des Drehlagers 21 des Gehäuses 16 der beiden Spiegel 8, 9 kolinear zu der Achse des Drehlagers 23 der Aufnahmevorrichtung 19 angeordnet ist. Diese beiden Achsen fallen mit der y-Achse 7 zusammen.

Die Bauteile der optischen Anordnung zum Ablenken eines Lichtstrahls sind in Form von Modularen, leicht austauschbaren Bauteilen ausgeführt. Hierbei bilden das die beiden ersten Spiegel 8, 9 aufnehmende Gehäuse 16 und der das Gehäuse 16 drehende Drehantrieb 5, wie in den Fig. 1 und 2 gezeigt, ein austauschbares Modul. Der dritte Spiegel 10 und der ihn drehende Drehantrieb 4 bilden ein weiteres austauschbares Modul. Die in Fig. 3 gezeigte gesamte Aufnahmevorrichtung 19 ist ebenfalls modular ausgeführt. Der das Gehäuse 16 drehende Drehantrieb 5 ist als Galvanometer ausgeführt, der Schwingungen in einem Frequenzbereich von 10 bis 800 Hz ausführen kann. Der den dritten Spiegel 10 drehende Drehantrieb 4 ist als resonantes Galvanometer ausgeführt und schwingt bei einer Frequenz von 4 kHz. Die Aufnahmevorrichtung 19 wird von einem nicht eingezeichneten Schrittmotor um die y-Achse gedreht.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Optische Anordnung zum Ablenken eines Lichtstrahls (1, 14) insbesondere in zwei im wesentlichen senkrecht zueinander liegenden Richtungen (2, 3), mit zwei mittels jeweils eines Drehantriebs (4, 5) um senkrecht zueinander liegende Achsen - x-Achse (6) und y-Achse (7) - drehbaren ersten und dritten Spiegel (8, 10), wobei einem der beiden Spiegel (8, 10) ein zweiter Spiegel (9) in einer vorgegebenen Winkelposition drehfest zugeordnet ist, so dass die einander zugeordneten ersten und zweiten Spiegel (8, 9) gemeinsam um die y-Achse (7) drehen und dabei den Lichtstrahl (1, 14) um einen Drehpunkt (11) drehen, der auf der Drehachse (6) - x-Achse - des dritten Spiegels (10) liegt, dass die Spiegel (8, 9, 10) derart angeordnet sind, dass die optische Achse des zwischen dem zweiten und dem dritten Spiegel (9, 10) verlaufenden Lichtstrahls (12) stets im wesentlichen in einer die x-Achse (6) umfassenden, senkrecht zur y-Achse (7) stehenden Ebene liegt, dass der erste und der zweite Spiegel (8, 9) in einem Gehäuse (16) angeordnet sind, dass das. Gehäuse (16) mindestens zwei Öffnungen (17, 18) aufweist, durch die Lichtstrahlen (14, 12) ein- bzw. austreten, und dass das Gehäuse (16) direkt mit dem Drehantrieb (5) verbunden ist **dadurch gekennzeichnet, dass** die beiden Drehantriebe (4, 5) unmittelbar an einer Aufnahmevorrichtung (19) angebracht sind, dass die Aufnahmevorrichtung (19) drehbar angeordnet ist, dass das Drehlager (21) des Gehäuses (16) der beiden Spiegel (8, 9) in einem Drehlager (23) der Aufnahmevorrichtung (19) gelagert ist und dass das Drehlager (21) des Gehäuses (16) und das Drehlager (23) der Aufnahmevorrichtung (19) jeweils einen Durchgang (22) ausgebildet haben, durch den der abgelenkte Lichtstrahl (13) durchtritt.

2. Anordnung nach Anspruch 1, **dadurch gekennzeichnet, dass** die Spiegel (8, 9, 10) derart angeordnet sind, dass die optische Achse des von dem zweiten Spiegel (9) zu dem dritten Spiegel (10) verlaufenden Lichtstrahls stets im wesentlichen in einem Punkt (11) auf der Spiegelfläche des dritten Spiegels (10) auftrifft, der der Schnittpunkt der beiden Drehachsen (6, 7) ist.

3. Anordnung nach Anspruch 1 oder 2, **dadurch gekennzeichnet, dass** die optische Achse des auf den ersten Spiegel (8) einfallenden Lichtstrahls (14) und die optische Achse des von dem dritten Spiegel (10) reflektierten Lichtstrahls (13) im wesentlichen kolinear ist, wenn sich der dritte Spiegel (10) unausgelenkt ist.

4. Anordnung nach einem der Ansprüche 1 bis 3, **dadurch gekennzeichnet, dass** die Drehachse (7) der beiden ersten Spiegel (8, 9) im wesentlichen kolinear zu der optischen Achse des auf den ersten Spiegel (8) einfallenden Lichtstrahls (14) ist.

5. Anordnung nach einem der Ansprüche 1 bis 4, **dadurch gekennzeichnet, dass** die Drehachse (7) des ersten und zweiten Spiegels (8, 9) im wesentlichen kolinear zu der optischen Achse des von dem dritten Spiegel (10) reflektierten Lichtstrahls (13) ist, wenn sich der dritte Spiegel (10) unausgelenkt ist.

6. Anordnung nach einem der Ansprüche 1 bis 5, **dadurch gekennzeichnet, dass** zwischen dem den ersten und zweiten Spiegel (8, 9) um die y-Achse (7) drehenden Drehantrieb (5) und dem ersten Spiegel (8) ein vierter Spiegel (15) ortsfest angeordnet ist.

7. Anordnung nach einem der Ansprüche 1 bis 6, **dadurch gekennzeichnet, dass** der dritte Spiegel (10) direkt mit dem weiteren Drehantrieb (4) verbunden ist.

8. Anordnung nach Anspruch 7, **dadurch gekennzeichnet, dass** die Aufnahmevorrichtung (19) um die y-Achse (7) dreht, und dass durch Drehen der Aufnahmevorrichtung (19) die Orientierung der Strahlablenkrichtungen (2, 3) veränderbar ist.

9. Anordnung nach einem der Ansprüche 6 bis 8, **dadurch gekennzeichnet, dass** das die beiden ersten Spiegel (8, 9) aufnehmende Gehäuse (16) und der das Gehäuse (16) drehende Drehantrieb (5) zu einem austauschbaren Modul zusammengefasst ist, dass der dritte Spiegel (10) und der ihn drehende Drehantrieb (4) zu einem austauschbaren Modul zusammengefasst ist und dass die Aufnahmevorrichtung (19) in Form eines austauschbaren Moduls ausgeführt ist.

10. Anordnung nach einem der Anspruch 9, **dadurch gekennzeichnet, dass** die austauschbaren Module und/oder die modular ausgeführte Aufnahmevorrichtung (19) Führungselemente und/oder Anschlagelemente aufweisen.

11. Anordnung nach einem der Ansprüche 1 bis 10, **dadurch gekennzeichnet, dass** als Drehantrieb (4, 5) ein Galvanometer oder ein Schrittmotor dient.

## Claims

1. Optical arrangement for deflecting a light beam (1, 14), in particular in two substantially mutually perpendicular directions, (2, 3), having two first and third mirrors (8, 10) which can be rotated by means of a rotary drive (4, 5) in each case about mutually perpendicular axes - x-axis (6) and y-axis (7) - one of the two mirrors (8, 10) being assigned a second mirror (9) in a prescribed angular position in a rotationally fixed fashion such that the mutually assigned first and second mirrors (8, 9) rotate jointly about the y-axis (7) and in so doing rotate the light beam (1, 14) about a pivot (11) which lies on the axis of rotation (6) - x-axis - of the third mirror (10), that the mirrors (8, 9, 10) are arranged in such a way that the optical axis of the light beam (12) running between the second and the third mirror (9, 10) always lie substantially in a plane containing the x-axis (6) and perpendicular to the y-axis (7), that the first and the second mirror (8, 9) are arranged in a housing (16), that the housing (16) has at least two openings (17, 18) through which light beams (14, 12) enter and emerge, and that the housing (16) is directly connected to the rotary drive (5), **characterized in that** the two rotary drives (4, 5) are fitted directly on a holding device (19), **in that** the holding device (19) is rotatably arranged, **in that** the rotary bearing (21) of the housing (16) of the two mirrors (8, 9) is supported in a rotary bearing (23) of the holding device (19), and **in that** the rotary bearing (21) of the housing (16) and the rotary bearing (23) of the holding device (19) each have a passage (22) constructed through which the deflected light beam (13) passes.

2. Arrangement according to Claim 1, **characterized in that** the mirrors (8, 9, 10) are arranged in such a way that the optical axis of the light beam running from the second mirror (9) and to the third mirror (10) always impinges substantially at a point (11) on the mirror surface of the third mirror (10) which is the point of intersection of the two axes of rotation (6, 7).

3. Arrangement according to Claim 1 or 2, **characterized in that** the optical axis of the light beam (14) incident on the first mirror (8), and the optical axis of the light beam (13) reflected from the third mirror (10) are essentially collinear when the third mirror (10) is undeflected.

4. Arrangement according to one of Claims 1 to 3, **characterized in that** the axis of rotation (7) of the two first mirrors (8, 9) is substantially collinear with the optical axis of the light beam (14) incident on the first mirror (8).

5. Arrangement according to one of Claims 1 to 4, **characterized in that** the axis of rotation (7) of the first and second mirror (8, 9) is substantially collinear with the optical axis of the light beam (13) reflected from the third mirror (10) when the third mirror (10) is undeflected.

6. Arrangement according to one of Claims 1 to 5, **characterized in that** a fourth mirror (15) is arranged fixed between the rotary drive (5) rotating the first and second mirror (8, 9) about the y-axis (7), and the first mirror (8).

7. Arrangement according to one of Claims 1 to 6, **characterized in that** the third mirror (10) is directly connected to the further rotary drive (4).

8. Arrangement according to Claim 7, **characterized in that** the holding device (19) rotates about the y-axis (7), and **in that** the orientation of the beam directions of deflection (2, 3) can be varied by rotating the holding device (19).

9. Arrangement according to one of Claims 6 to 8, **characterized in that** the housing (16) accommodating the two first mirrors (8, 9), and the rotary drive (5) rotating the housing (16) are combined to form a replaceable module, **in that** the third mirror (10) and the rotary drive (4) rotating it are combined to form a replaceable module, and **in that** the holding device (19) is designed in the form of a replaceable module.

10. Arrangement according to Claim 9, **characterized in that** the replaceable modules and/or the modularly designed holding device (19) have/has guide elements and/or stop elements.

11. Arrangement according to one of Claims 1 to 10, **characterized in that** a galvanometer or a stepping motor serves as rotary drive (4, 5).

## Revendications

1. Arrangement optique pour dévier un rayon de lumière (1, 14), notamment dans deux directions (2, 3) essentiellement perpendiculaires l'une par rapport à l'autre, comprenant deux miroirs (8, 10), un premier et un troisième, pouvant tourner autour d'axes perpendiculaire l'un à l'autre, l'axe x (6) et l'axe y (7), à chaque fois au moyen d'un entraînement rotatif (4, 5), l'un des deux miroirs (8, 10) étant associé à un deuxième miroir (9) dans une position angulaire donnée sans pouvoir tourner de sorte que le premier et le deuxième miroir (8, 9) associés l'un à l'autre tournent ensemble autour de l'axe y (7) et font ainsi tourner le rayon de lumière (1, 14) autour d'un centre de rotation (11) qui se trouve sur l'axe de rotation (6), l'axe x, du troisième miroir (10), que les miroirs (8, 9, 10) sont disposés de telle sorte que l'axe optique du rayon de lumière (12) qui passe entre le deuxième et le troisième miroir (9, 10) se trouve toujours pour l'essentiel dans un plan englobant l'axe x (6) et perpendiculaire à l'axe y (7), que le premier et le deuxième miroir (8, 9) sont disposés dans un boîtier (16), que le boîtier (16) présente au moins deux ouvertures (17, 18) à travers lesquelles entrent ou sortent des rayons de lumière (14, 12) et que le boîtier (16) est relié directement avec l'entraînement rotatif (5), **caractérisé en ce que** les deux entraînements rotatifs (4, 5) sont montés directement sur un dispositif d'accueil (19), que le dispositif d'accueil (19) est disposé de manière à pouvoir tourner, que le support rotatif (21) du boîtier (16) des deux miroirs (8, 9) est logé dans un support rotatif (23) du dispositif d'accueil (19) et que le support rotatif (21) du boîtier (16) et le support rotatif (23) du dispositif d'accueil (19) ont à chaque fois un passage (22) à travers lequel passe le rayon de lumière (13) dévié.

2. Arrangement selon la revendication 1, **caractérisé en ce que** les miroirs (8, 9, 10) sont disposés de telle sorte que l'axe optique du rayon de lumière qui s'étend du deuxième miroir (9) vers le troisième miroir (10) vient toujours heurter la surface réfléchissante du troisième miroir (10) essentiellement en un point (11) qui est le point d'intersection des deux axes de rotation (6, 7).

3. Arrangement selon la revendication 1 ou 2, **caractérisé en ce que** l'axe optique du rayon de lumière (14) qui vient heurter le premier miroir (8) et l'axe optique du rayon de lumière (13) réfléchi par le troisième miroir (10) sont pour l'essentiel colinéaires lorsque le troisième miroir (10) n'est pas dévié.

4. Arrangement selon l'une des revendications 1 à 3, **caractérisé en ce que** l'axe de rotation (7) des deux premiers miroirs (8, 9) est pour l'essentiel colinéaire à l'axe optique du rayon de lumière (14) qui vient heurter le premier miroir (8).

5. Arrangement selon l'une des revendications 1 à 4, **caractérisé en ce que** l'axe de rotation (7) du premier et du deuxième miroir (8, 9) est pour l'essentiel colinéaire à l'axe optique du rayon de lumière (13) réfléchi par le troisième miroir (10) lorsque le troisième miroir (10) n'est pas dévié.

6. Arrangement selon l'une des revendications 1 à 5, **caractérisé en ce qu'**un quatrième miroir (15) est monté en une position fixe entre l'entraînement rotatif (5) qui fait tourner le premier et le deuxième miroir (8, 9) autour de l'axe y (7) et le premier miroir (8).

7. Arrangement selon l'une des revendications 1 à 6, **caractérisé en ce que** le troisième miroir (10) est relié directement avec l'entraînement rotatif (4) supplémentaire.

8. Arrangement selon la revendication 7, **caractérisé en ce que** le dispositif d'accueil (19) tourne autour de l'axe y (7) et que l'orientation des directions de déviation du rayon (2, 3) peut être modifiée en faisant tourner le dispositif d'accueil (19).

9. Arrangement selon l'une des revendications 6 à 8, **caractérisé en ce que** le boîtier (16) qui reçoit les deux premiers miroirs (8, 9) et l'entraînement rotatif (5) qui fait tourner le boîtier (16) sont assemblés en un module interchangeable, **en ce que** le troisième miroir (10) et l'entraînement rotatif (4) qui le fait tourner sont assemblés en un module interchangeable et **en ce que** le dispositif d'accueil (19) est réalisé sous la forme d'un module interchangeable.

10. Arrangement selon la revendication 9, **caractérisé en ce que** les modules interchangeables et/ou le dispositif d'accueil (19) de construction modulaire présentent des éléments de guidage et/ou des éléments de butée.

11. Arrangement selon l'une des revendications 1 à 10, **caractérisé en ce qu'**un galvanomètre ou un moteur pas à pas fait office d'entraînement rotatif (4, 5).
